# EUROPEAN PATENT SPECIFICATION

(11) **EP 3 869 849 B1**
(45) Date of publication and mention of the grant of the patent: **31.07.2024**
(21) Application number: 20831624.0
(22) Date of filing: 09.06.2020
(51) Int. Cl.: H04W 24/02

(54) **METHOD, APPARATUS AND RADIO NETWORK OPTIMIZATION CONTROL FUNCTION UNIT (RCF) FOR NETWORK OPTIMIZATION**
VERFAHREN, VORRICHTUNG UND FUNKNETZOPTIMIERUNGSSTEUERUNGSFUNKTIONSEINHEIT (RCF) ZUR NETZWERKOPTIMIERUNG
PROCÉDÉ, APPAREIL ET UNITÉ À FONCTION DE COMMANDE D'OPTIMISATION DE RÉSEAU RADIO (RCF) PERMETTANT UNE OPTIMISATION DE RÉSEAU

(30) Priority: 24.06.2019 CN 201910551380
(43) Date of publication of application: 25.08.2021
(73) Proprietor: ZTE Corporation, Shenzhen, Guangdong 518057 (CN)
(72) Inventor: ZENG, Lingling, Shenzhen, Guangdong 518057 (CN)
(74) Representative: Swindell & Pearson Limited
(86) International application number: PCT/CN2020/095113
(87) International publication number: WO 2020/259276

(56) References cited:
- CN-A- 105 898 762
- CN-A- 107 846 270
- CN-A- 109 561 444
- CN-A- 109 688 597
- US-A1- 2019 138 908
- US-A1- 2019 138 934
- US-A1- 2020 195 506
- HUAWEI ET AL.: "Discussion on supporting MEC with CAPIF", 3GPP TSG-SA WG6 MEETING #25 S6-181078, 27 July 2018 (2018-07-27), XP051471196, DOI: 20200812091158A

## Description

### TECHNICAL FIELD

The present disclosure relates to, but not limited to, a method and apparatus for network optimization, a Radio network optimization Control Functional unit (RCF), and a computer-readable storage medium.

### BACKGROUND

With the rapid development of the radio access technology, the mobile Internet is spread all over the world, and mobile applications are becoming increasingly richer. The mobile communication network has become an indispensable necessity for people's life and entertainment. In the fifth-generation mobile communication (5G) era, three main application scenarios, i.e., enhance mobile broadband (eMBB), ultra-Reliable & Low Latency Communication (uRLLC) and massive machine type communication (mMTC), will further lead to the rapid increase of mobile data traffic and diversity.

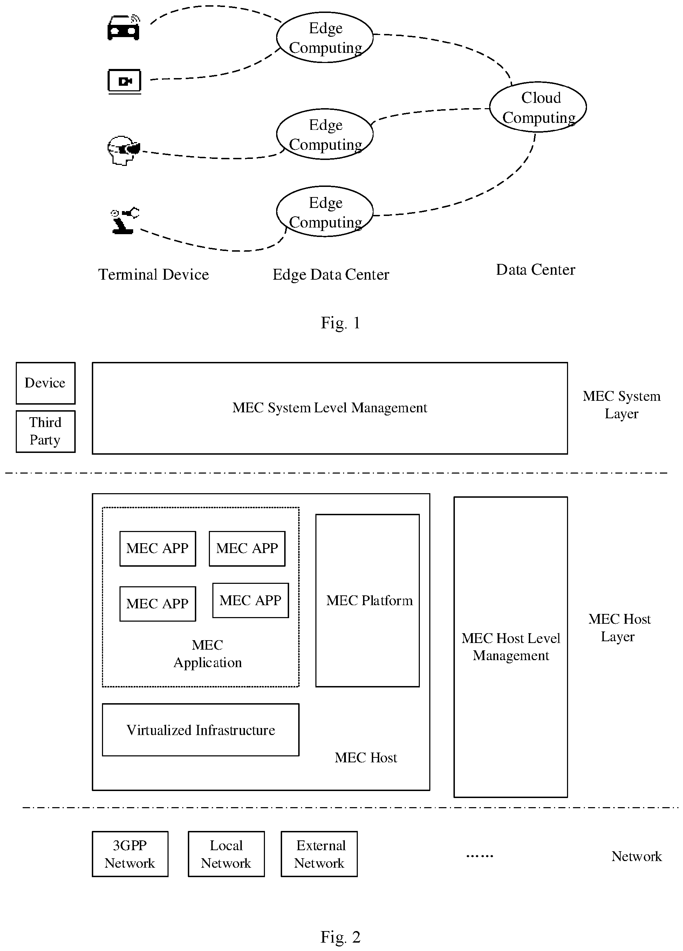

Multi-access edge computing (MEC) emerges under the background of increasing demands on low-latency and high-bandwidth services. With the edge computing technology, by deploying a server on the edge of the radio network, cloud computing resources are sunk to radio access networks, to shorten the physical distance between a user equipment (UE) terminal and a service application (APP), for the purposes of greatly reducing latency and saving the bandwidth of the backhaul network. The edge computing effectively integrates the mobile communication network with the Internet technology, and has the advantages of service localization, short distance, low latency and the like. By deploying the edge computing in the mobile network, a distributed cloud computing architecture shown in Fig. 1 can be constructed.

The ETSI (European Telecommunications Standards Institute)-MEC standard defines an edge computing framework as shown in Fig. 2, of which main functional units include:
MEC host, including an MEC platform mainly responsible for providing multi-access edge services and collecting operation information required for edge applications, MEC applications (APPs), and a virtualized infrastructure including a data plane;
MEC host level management, including MEC platform management responsible for MEC platform functional management, application rules and life cycle management, and virtualized infrastructure management responsible for allocating, managing and releasing virtualization resources;
MEC system level management, including an edge composer responsible for selecting the MEC host, loading applications and triggering initialization and termination of application instances, and an operation support system responsible for operation and maintenance, authorization of terminal devices and third-party client requests, and transferring to the edge composer; and
Networks for MEC, including 3rd Generation Partnership Project (3GPP) networks, local networks, external networks or the like.

As one of the most mainstream reference architectures of the edge computing system, the ETSI-MEC is mainly deployed round the 4G communication network, and evolves in combination with the 3GPP 5G communication network.

On the other hand, with the growth of increasingly dense, rich and demanding mobile applications, the mobile networks have increasing complexity, which cannot be handled by conventional manual methods for network deployment and network optimization.

For these, CN 109688597A discloses an artificial intelligence-based networking method for fog radio access networks, which includes: a central computing logic module receives reported data which includes measurement report data from user terminals, wireless transmission data from base stations, and operation and maintenance data from a radio access network. Based on these reported data and proper machine learning algorithms, the central computing logic module configures an operating mode of a radio access network that matches user behavior, service attributes, and radio access network performance indicators. According to the operating mode, an edge computing logic module determines whether to optimize a current configuration of an edge communication entity and allocation of radio resources, computing resources, and caching resources.

US 2019/138934A1 provides systems, apparatuses, methods, and computer-readable media, are provided for distributed machine learning (ML) training using heterogeneous compute nodes in a heterogeneous computing environment, where the heterogeneous compute nodes are connected to a master node via respective wireless links. ML computations are performed by individual heterogeneous compute nodes on respective training datasets, and a master combines the outputs of the ML computations obtained from individual heterogeneous compute nodes. The ML computations are balanced across the heterogeneous compute nodes based on knowledge of network conditions and operational constraints experienced by the heterogeneous compute nodes.

US 2019/138908A1 describes systems and methods of artificial intelligence (AI) processing using hardware acceleration within edge computing settings. Processing performed at an edge computing device may include: obtaining a request for an AI operation using an AI model; identifying, based on the request, an AI hardware platform for execution of an instance of the AI model; and causing execution of the AI model instance using the AI hardware platform.

### SUMMARY

The following is a summary of the subject matters described in detail in the disclosure, which is not intended to limit the scope of the claims.

In embodiments of the disclosure, a method for network optimization, a Radio network optimization Control Functional unit (RCF), and a computer-readable storage medium are provided. The features of the method and apparatus for network optimization, RCF, and computer-readable storage medium according to embodiments of the present disclosure are set out in the appended set of claims.

Other aspects will be apparent from reading and understanding the drawings and detailed description.

### BRIEF DESCRIPTION OF DRAWINGS

Fig. 1 shows the position of the MEC in a cloud computing network;
Fig. 2 shows an ETSI-MEC system framework;
Fig. 3 shows an overall architecture of a 4G/5G radio access network;
Fig. 4 shows the position of an RCF in the ETSI-MEC system framework according to an embodiment of the present disclosure;
Fig. 5 is a flowchart of a method for network optimization according to an embodiment of the present disclosure;
Fig. 6 is a flowchart of the method for network optimization according to another embodiment of the present disclosure;
Fig. 7 is a composition diagram of a system for network optimization based on edge computing according to an embodiment of the present disclosure;
Fig. 8 is a flowchart of acquiring, by the RCF, real-time information from a radio access network element according to an embodiment of the present disclosure;
Fig. 9 is a flowchart of actively issuing a radio optimization assistance policy by the RCF according to an embodiment of the present disclosure;
Fig. 10 is a flowchart of issuing, by the RCF, the radio optimization assistance policy by inquiring according to an embodiment of the present disclosure;
Fig. 11 is a flowchart of acquiring, by the RCF, an intelligent offline model from a management system and reporting a result of evaluation of an intelligent model application to the management system according to an embodiment of the present disclosure;
Fig. 12 is a flowchart of transmitting, by the RCF, a radio optimization assistance policy indication to a service APP via a third interface a according to an embodiment of the present disclosure;
Fig. 13 is a flowchart of acquiring, by the RCF, an intelligent offline model from an intelligent algorithm APP and reporting a result of evaluation of an intelligent model application to the intelligent algorithm APP according to an embodiment of the present disclosure;
Fig. 14 is a flowchart of extracting features by the RCF and performing online inference by the intelligent algorithm application according to an embodiment of the present disclosure;
Fig. 15 is a flowchart of application instance I of the present disclosure;
Fig. 16 is a flowchart of application instance II of the present disclosure;
Fig. 17 is a flowchart of a apparatus for network optimization according to an embodiment of the present disclosure; and
Fig. 18 is a flowchart of the apparatus for network optimization according to another embodiment of the present disclosure.

### DETAILED DESCRIPTION

The embodiments of the present disclosure will be described below in detail with reference to the drawings.

The steps shown in the flowcharts in the drawings may be executed in a computer system containing a set of computer-executable instructions. Moreover, although a logical order is shown in the flowcharts, in some cases, the steps shown or described may be executed in an order different from the logical order.

Intelligentization is an important development direction for the mobile communication network. For this, new artificial intelligence and deep learning technologies are utilized to obtain the abilities of self-adaptation and self-driving, for reduction in the operation cost of the network and for creating a new era for network operation.

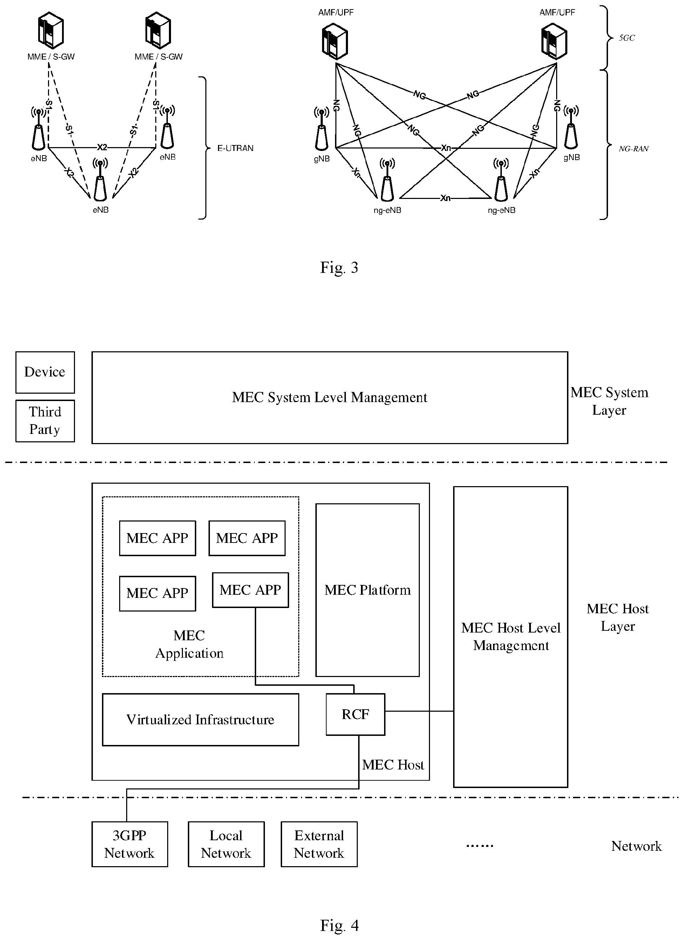

To reduce user plane latency and avoid single point of failure, in the 4/5G radio access network of the 3GPP, a flat architecture is adopted, as shown in Fig. 3. A flat network of the Evolved UMTS Terrestrial Radio Access Network (E-UTRAN) is formed among the Mobility Management Entity (MME), the Serving GateWay (S-GW) and the enhanced Node B (eNB) through an S1 interface and between eNBs through an X2 interface; and, a 5G flat network including the Fifth-Generation Core network (5GC) and the Next-Generation Radio Access Network (NG-RAN) is formed among the Access and Management Function (AMF), the User Plane Function (UPF) and the new air interface next-generation Node B (gNB) through an NG interface and between gNBs directly through an Xn interface. There are no distributed computing anchors in the flat network, so it is impossible to establish a global real-time/near-real-time data view for a specific region, and it is also impossible to realize regionally-concentrated near-real-time intelligent optimization control. This will become a major obstacle to the intelligent and comprehensive development of the mobile communication network.

In accordance with the embodiments of the present disclosure, the MEC technology is deeply integrated with the 4/5G radio access network of the 3GPP to realize efficient interaction, so that a technical support is provided for regionally-concentrated near-real-time radio network intelligent optimization, and the edge computing system is extended to the application field of the radio network intelligent optimization.

According to the embodiments of the present disclosure, new functional units are added in the edge computing system, including downloading or generation of an intelligent model based on artificial intelligence or machine learning algorithms, collection of real-time data in a regional range, execution of online model inference and issuing of a radio optimization assistance policy.

As shown in Fig. 4, in the embodiments of the present disclosure, an RCF is added in the edge computing system, and the RCF can be connected to an MEC management system, radio access network elements in the 3GPP network, and MEC APPs.

The radio access network elements of the 3GPP include: eNBs, gNBs, and eNBs supporting the NG interface (ng-eNBs). The MEC APPs are APPs on a server side, generally third-party APPs. The MEC APPs may be classified into two categories, i.e., service APPs and intelligent algorithm APPs.

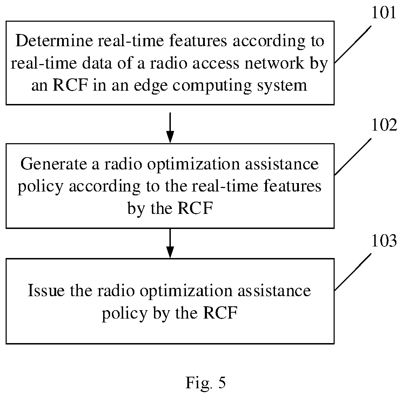

As shown in Fig. 5, a method for network optimization according to an embodiment of the present disclosure includes the following steps.

At Step 101, an RCF in an edge computing system is configured to determine real-time features according to real-time data of a radio access network.

In this step, the RCF is configured to collect real-time data and extracts real-time features.

The real-time data refers to non-historical data, which may include data acquired timely at a current time or data acquired in a current period of time. The data acquired in the current period of time may also be referred to as near-real-time data.

In an embodiment, the real-time data includes real-time information. The RCF is configured to acquire real-time information from a radio access network element and then extract real-time features from the real-time information.

The RCF may also be configured to extract real-time features from a data stream of a data plane.

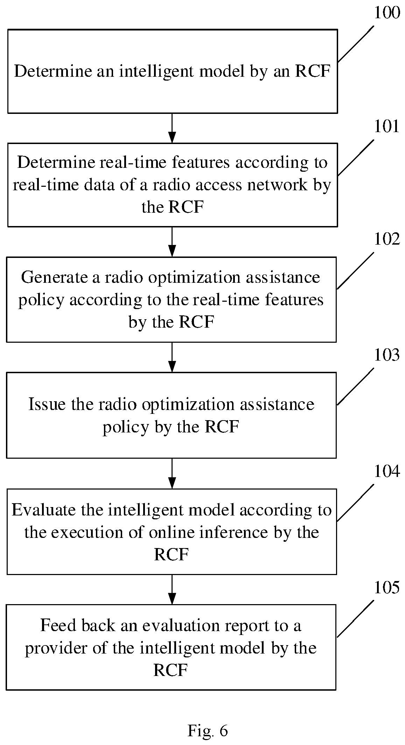

As shown in Fig. 6, in an embodiment, before the step 101, the method further includes the following step.

At step 100, the RCF is configured to determine an intelligent model.

The RCF may determine the intelligent model in the following three ways.
I. The RCP acquires the intelligent model from an MEC management system.
   In this way, the RCF can receive a trained intelligent offline model from the MEC management system.
II. The RCF acquires the intelligent model from an MEC intelligent algorithm application (APP).
   In this way, the RCF receives a customized intelligent offline model from the intelligent algorithm APP.
III. The RCF obtains the intelligent model by training according to the real-time data acquired by itself.

In this way, the RCF generates a local intelligent model by training according to the real-time collected by itself.

The intelligent model is generated based on a certain amount of data with artificial intelligence and machine learning algorithms.

In an embodiment, the RCF updates the local intelligent model according to the real-time features.

The local intelligent model may be an intelligent offline model.

At step 102, the RCF is configured to generate a radio optimization assistance policy according to the real-time features.

In an embodiment, the step 102 includes: performing, by the RCF, online inference based on the intelligent model and according to the real-time features to generate a radio optimization assistance policy.

In another embodiment, the step 102 includes: reporting, by the RCF, the real-time features to the MEC intelligent algorithm APP, and generating a radio optimization assistance policy according to an online inference result indication provided by the MEC intelligent algorithm APP.

At step 103, the RCF is configured to issue the radio optimization assistance policy.

In an embodiment, the RCF transmits the radio optimization assistance policy to a radio access network element, allowing the radio access network element to perform radio resource optimization.

The RCF transmits the radio optimization assistance policy to a radio access network element, such that the radio access network element performs radio resource optimization according to the indication of the policy and in combination with its own radio resource management algorithm.

In an embodiment, the RCF transmits the radio optimization assistance policy to an MEC service APP, allowing the MEC APP to perform optimization for an application of a UE.

The RCF transmits the radio optimization assistance policy to an MEC service APP, and the MEC APP performs optimization for an application of the UE according to a policy indication and in combination with its own service application layer algorithm.

As shown in Fig. 6, in an embodiment, for the intelligent offline model downloaded locally, the method further includes step 104 following step 103.

At step 104, the RCF is configured to evaluate the intelligent model according to the execution of online inference.

In an embodiment, after the RCF evaluates the intelligent model according to the execution of online inference, the method further includes step 105.

At step 105, the RCF is configured to feed back an evaluation report to a provider of the intelligent model.

The provider of the intelligent model can accordingly restart offline model training.

In the embodiment of the present disclosure, the MEC technology is integrated with the radio access network to realize efficient interaction of real-time radio data and intelligent radio optimization assistance policy between the MEC and the radio access network, such that a closed-loop control for radio network intelligent optimization is formed and the self-driven optimization of the radio network is realized.

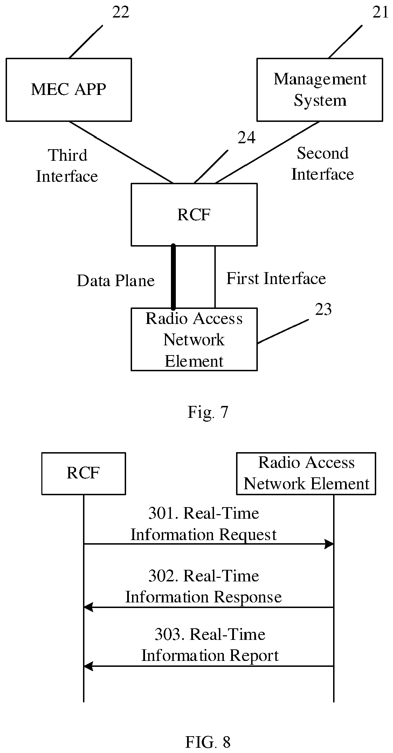

As shown in Fig. 7, a system for network optimization based on edge computing according to an embodiment of the present disclosure includes a management system 21 in the MEC, an MEC APP 22, and a 3GPP radio access network element 23 in the MEC network. The system further includes a new module - an RCF 24 in the MEC.

The position of the RCF in the ETSI-MEC edge computing framework is shown in Fig. 4. The relationship between the RCF and other modules is shown in Fig. 7.
I. The interface between the RCF 24 and the 3GPP radio access network element 23 is a first interface, through which the RCF acquires real-time information from the radio access network element and the RCF transmits the radio optimization assistance policy to the radio access network element.

As shown in Fig. 8, the step of acquiring, by the RCF, real-time information from the radio access network element includes steps S301 to S303.

At step 301, the RCF transmits a real-time information request message to the radio access network element. The message may include, but not limited to: base station identifier, cell identifier, type of acquired information, acquisition state or the like.

At step 302, the RCF receives a real-time information response message from the radio access network element. The message may include, but not limited to: execution result or the like.

At step 303, the RCF receives a real-time information report message from the radio access network element. The message may include, but not limited to: base station identifier, cell identifier, cell load, neighbor interference, neighbor load, UE identifier, intra-frequency/inter-frequency/inter-system measurement, handover count, acquisition time, event/cycle type or the like.

The RCF may issue the radio optimization assistance policy actively or by inquiring.

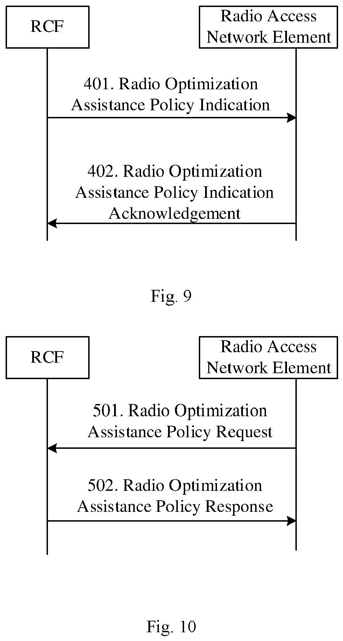

As shown in Fig. 9, issuing actively may include steps 401-402.

At step 401, the RCF transmits a radio optimization assistance policy indication message to the radio access network element. The message may include, but not limited to: base station identifier, cell identifier, neighbor auxiliary information, UE identifier, algorithm type, recommended target cell, recommended QoS (Quality of Service) priority, recommended POLICY type or the like.

At step 402, the RCF receives a radio optimization assistance policy indication acknowledgement message from the radio access network element. The message may include, but not limited to, execution result or the like.

As shown in Fig. 10, issuing by inquiring may include steps 501-502.

At step 501, the RCF receives a radio optimization assistance policy request message transmitted by the radio access network element. The message may include, but not limited to, base station identifier, UE identifier, cell identifier, real-time information, neighbor information or the like.

At step 502, the RCF transmits a radio optimization assistance policy response message to the radio access network element. The content of the message is as described in the step 401. The message may include, but not limited to, base station identifier, cell identifier, neighbor auxiliary information, UE identifier, algorithm type, recommended target cell, recommended QoS priority, recommended POLICY type or the like.

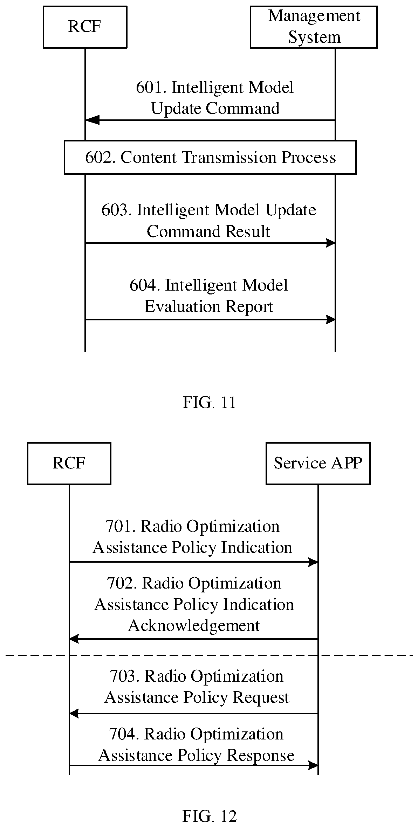

II. The interface between the RCF 24 and the management system 21 is a second interface, through which the RCF 24 acquires the trained intelligent offline model from the management system 21 and the RCF 24 reports a result of evaluation of the intelligent model application to the management system 21. As shown in Fig. 11, steps S601 to S604 are included.

At step 601, the RCF receives an intelligent model update command message from the management system. The message may include, but not limited to, user name, password, download address, file name or the like.

At step 602, the RCF initiates a transmission process to download the intelligent model. This process may include, but not limited to, a file transmission process.

The content of the file may include, but not limited to, the type of the intelligent model, the identifier of the changed model, model data or the like.

The type of the intelligent model may include, but not limited to, radio frequency fingerprint database, intelligent positioning fingerprint database, cell interference model, TCP (Transmission Control Protocol) layer intelligent optimization model, service intelligent identification model, service intelligent prediction model or the like.

At step 603, the RCF transmits a model update command result message to the management system. The message may include, but not limited to, execution result or the like.

At step 604, the RCF may further transmits an intelligent model evaluation report message to the management system. The message may include, but not limited to, type of the intelligent model, model identifier, model availability, model execution count or the like.

III. The interface between the RCF 24 and the MEC APP 22 is a third interface. The interface between the RCF and a service APP is a third interface a, and the interface between the RCF and an intelligent algorithm APP is a third interface b.

Through the third interface a, the RCF transmits a radio optimization assistance policy indication to a service APP, to trigger the APP to perform service application layer optimization. Active issuing or issuing by inquiring is applicable. As shown in Fig. 12, steps S701 to S702 are included for active issuing, and steps S703 and S704 are included for issuing by inquiring.

At step 701, the RCF transmits a radio optimization assistance policy indication message to the service APP. The message may include, but not limited to, APP identifier, UE identifier, recommended video code rate or the like.

At step 702, the RCF receives a radio optimization assistance policy indication acknowledgement message returned by the service APP. The message may include, but not limited to, APP identifier, UE identifier, execution result or the like.

At step 703, the RCF receives a radio optimization assistance policy request message transmitted by the service APP. The message may include, but not limited to, APP identifier, UE identifier, recommended policy type or the like.

At step 704, the RCF transmits a radio optimization assistance policy response message to the service APP. The content in this message is as described in the step 701.

For the third interface b, two ways, i.e., way I and II, are available.

Way I: the RCF performs feature extraction and online inference.

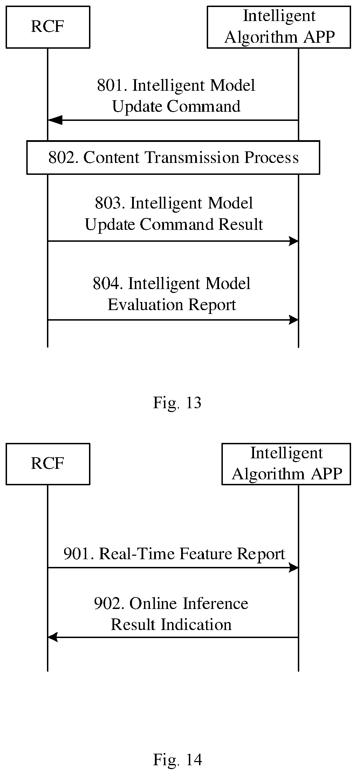

In this case, through the third interface b, the RCF acquires the trained intelligent offline model from an intelligent algorithm APP, and the RCF reports a result of evaluation of the intelligent model application to the intelligent algorithm APP. As shown in Fig. 13, similar to the second interface, the following steps S801 to S804 are included.

At step 801, the RCF receives an intelligent model update command message from the intelligent algorithm APP. The message may include, but not limited to, user name, password, download address, file name or the like.

At step 802, the RCF starts a transmission process to download the intelligent model. This process may include, but not limited to, a file transmission process.

The content of the file may include, but not limited to, the type of the intelligent model, the identification of the changed model, model data or the like.

The type of the intelligent model may include, but not limited to, radio frequency fingerprint database, intelligent positioning fingerprint database, cell interference model, TCP layer intelligent optimization model, service intelligent identification model, service intelligent prediction model or the like.

At step 803, the RCF transmits a model update command result message to the intelligent algorithm APP. The message may include, but not limited to, the result of execution or the like.

At step 804, the RCF may further transmit an intelligent model evaluation report message to the intelligent algorithm APP. The message may include, but not limited to, the type of the intelligent model, model identifier, model availability, model execution count or the like.

Way II: The RCF performs feature extraction, and the APP performs online inference. In this case, through the third interface b, the RCF transmits a real-time feature report to the intelligent algorithm APP and receives an online inference result indication transmitted by the intelligent algorithm APP, and the RCF generates a radio optimization assistance policy. As shown in Fig. 14, steps S901 and S902 are included.

At step 901, the RCF transmits a real-time feature report message to the intelligent algorithm APP. The message may include, but not limited to, APP identifier, type of the intelligent model, model identifier, statistical value of specified features or the like.

At step 902, the RCF receives an online inference result indication message from the intelligent algorithm APP. The message may include, but not limited to, APP identifier, type of the intelligent model, model identifier, result of service prediction or the like.

In conclusion, in accordance with the embodiments of the present disclosure, a global real-time (near-real-time) radio data view can be established in an edge computing region to realize rationally-concentrated near-real-time radio intelligent optimization control, taking the advantages of resource centralized decision and unified scheduling, and eventually improving the utilization of radio resources and the user's perception experience. Moreover, the method, apparatus and RCF of the embodiments of the present disclosure are compatible with the 4/5G radio access networks. The 4/5G radio access network elements focus on the processing of the 3GPP protocol stack. The radio optimization algorithm can be enhanced without frequently upgrading the version, without introducing the performance overhead of acquiring/analyzing the intelligent and extracting real-time features and without facing the security risk of directly opening to the third-party MEC APP. Therefore, the evolution of the intelligent optimization function for the radio networks is promoted.

The following description will be given by some embodiments.

### Embodiment I

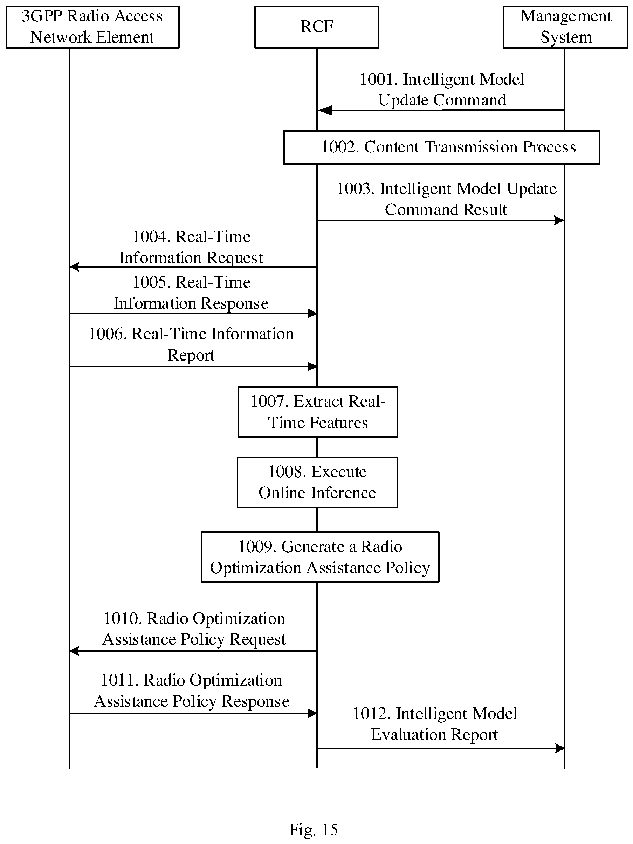

An RCF acquires an intelligent offline model from a management system, and issues an assistance policy to a radio access network element. As shown Fig. 15, main processing steps S 1001 to S 1012 are described below.

At steps 1001-1003, the RCF acquires the intelligent offline model from the management system.

At step 1001, the RCF receives an intelligent model update command from the management system. The message includes, but not limited to, user name, password, download address and file name.

At step 1002, the RCF initiates a transmission process to download the intelligent model. This process may include, but not limited to, a file transmission process. The content of the file may include, but not limited to, type of the intelligent model, identifier of the model changed, and model data.

At step 1003, the RCF returns an intelligent model update command result transmitted to the management system. The signal in this message may include, but not limited to, execution result.

At steps 1004-1006, the RCF acquires real-time data of the radio access network element.

At step 1004, the RCF transmits a real-time information request to the radio access network element. The message may include, but not limited to, base station identifier, cell identifier, type of information acquired, and acquisition state.

At step 1005, the radio access network element returns a response. The message may include, but not limited to, execution result.

At step 1006, the radio access network element executes reporting. The message may include, but not limited to, base station identifier, cell identifier, cell load, neighbor interference, neighbor load, UE identifier, intra-frequency/inter-frequency/inter-system measurement, handover count, acquisition time, and event/cycle type.

At steps 1007-1009, the RCF extracts real-time features and performs online inference.

At step 1007, according to the requirements of the intelligent model, the RCF extracts specified real-time features from the real-time information, and extracts real-time features from a data stream of a data plane.

At step 1008, the RCF performs online inference according to the real-time features, and the RCF updates the local intelligent offline model.

At step 1009, the RCF generates a radio optimization assistance policy according to the result of inference.

At steps 1010-1011, the RCF issues the radio optimization assistance policy to the radio access network element.

At step 1010, the RCF receives a radio optimization assistance policy request from the radio access network element. The message may include, but not limited to, base station identifier, UE identifier, cell identifier and real-time information thereof, and neighbor information.

At step 1011, the RCF transmits a radio optimization assistance policy response to the radio access network element. The message may include, but not limited to, base station identifier, cell identifier, neighbor auxiliary information, UE identifier, algorithm type, recommended target cell, and recommended QoS priority.

At step 1012, the RCF reports intelligent model evaluation to the management system.

The RCF transmits an intelligent model evaluation report to the management system. The message includes, but not limited to, type of the intelligent model, model identifier, model availability, and model execution count. The management system may accordingly determine whether to re-train the intelligent offline model.

### Embodiment II

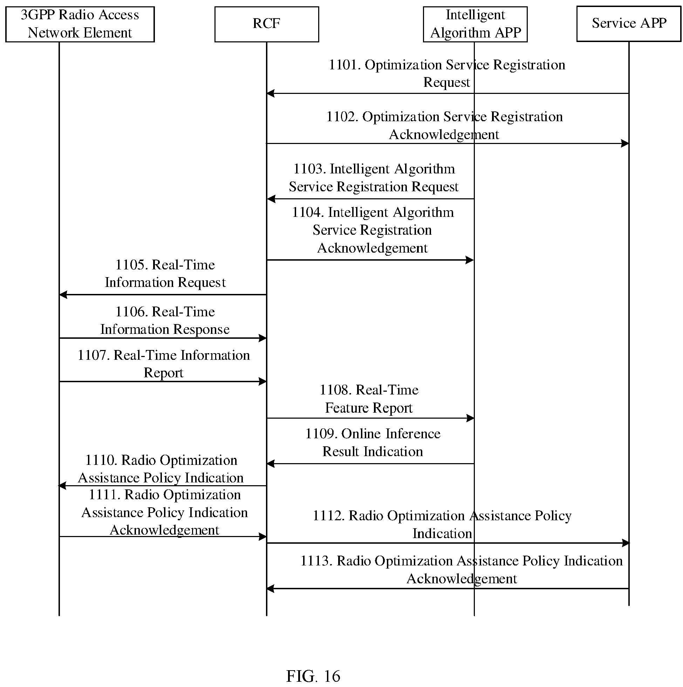

The RCF acquires a result of online inference from an intelligent algorithm APP, and issues an assistance policy to a radio access network element and a service APP. As shown in Fig. 16, main processing steps S1101 to S1113 are described below.

At steps 1101-1102, the RCF receives an optimization service request from a service APP.

At step 1101, the RCF receives an optimization service registration request from the service APP. The message may include, but not limited to, APP identifier, UE identifier, and service type.

At step 1102, the RCF transmits an optimization service registration response to the service APP. The message may include, but not limited to, APP identifier, UE identifier, service type, and the result of execution.

At steps 1103-1104, the RCF accepts an algorithm service request from an intelligent algorithm APP.

At step 1103, the RCF receives a service registration request message from the intelligent algorithm APP. The message may include, but not limited to, APP identifier, service type, the type of the intelligent model, model identifier, and specified features.

At step 1104, the RCF transmits a service registration response to the intelligent algorithm APP. The message may include, but not limited to, APP identifier, service type, and execution result.

At steps 1105-1107, the RCF acquires real-time data of the radio access network element.

At step 1105, the RCF transmits a real-time information request to the radio access network element. The message may include, but not limited to, base station identifier, cell identifier, type of acquired information, and acquisition state.

At step 1106, the radio access network element returns a response. The message may include, but not limited to, the result of execution.

At step 1107, the radio access network element executes reporting. The message may include, but not limited to, base station identifier, cell identifier, cell load, neighbor interference, neighbor load, UE identifier, intra-frequency/inter-frequency/inter-system measurement, handover count, acquisition time, and event/cycle type.

At steps 1108-1109, the RCF reports real-time features to the intelligent algorithm APP.

At step 1108, the RCF extracts specified feature from the real-time information, and transmits a real-time feature report to the APP. The message may include, but not limited to, APP identifier, the type of the intelligent model, model identifier, and statistical value of specified features.

At step 1109, the RCF receives an online inference result indication message transmitted by the intelligent algorithm APP. The message may include, but not limited to, APP identifier, the type of the intelligent model, model identifier, and result of service prediction.

At steps 1110-1011, the RCF may issue the radio optimization assistance policy to the radio access network element.

At step 1110, the RCF transmits a radio optimization assistance policy indication to the radio access network element. The message may include, but not limited to, base station identifier, cell identifier, UE identifier, algorithm type, and recommended QoS priority.

At step 1111, the RCF receives an indication acknowledgement returned by the radio access network element. The message may include, but not limited to, the result of execution.

At steps 1112-1113, the RCF may also issue the radio optimization assistance policy to the service APP.

At step 1112, the RCF transmits a radio optimization assistance policy indication to the service APP. The message may include, but not limited to, APP identifier, UE identifier, and recommended video code rate.

At step 1113, the RCF receives indication acknowledgement returned by the service APP. The message may include, but not limited to, execution result.

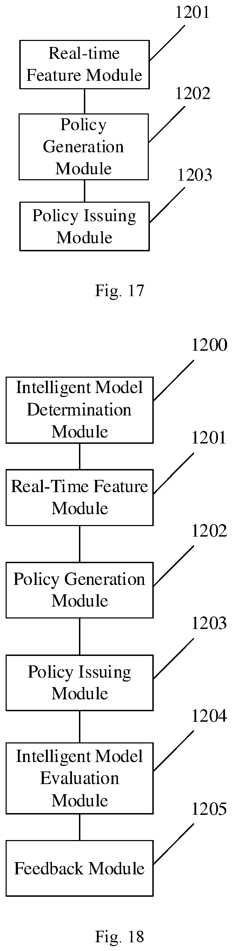

As shown in Fig. 17, in an embodiment of the present disclosure an apparatus for network optimization is further provided, including:
a real-time feature module 1201 configured to determine, by an RCF in an edge computing system, real-time features according to real-time data of a radio access network;
a policy generation module 1202 configured to generate a radio optimization assistance policy according to the real-time features; and
a policy issuing module 1203 configured to issue the radio optimization assistance policy.

In an embodiment, the real-time data includes real-time information. The real-time feature module 1201 is configured to acquire real-time information from a radio access network element and then extract real-time features from the real-time information.

In an embodiment, the real-time feature module 1201 is configured to extract real-time features from a data stream of a data plane.

As shown in Fig. 18, in an embodiment, the apparatus further includes:
an intelligent model determination module 1200 configured to determine an intelligent model.

In an embodiment, the intelligent model determination module 1200 is configured to determine the intelligent model in at least one of following ways:
acquiring the intelligent model from an MEC management system;
acquiring the intelligent model from an MES intelligent algorithm application (APP); and
obtaining the intelligent model by training according to the real-time data acquired by itself.

In an embodiment, the intelligent model determination module 1200 is further configured to update the local intelligent model according to the real-time features.

In an embodiment, the policy generation module 1202 is configured to perform, based on the intelligent model, online inference according to the real-time features to generate a radio optimization assistance policy.

As shown in Fig. 18, in an embodiment, the apparatus further includes:
an intelligent model evaluation module 1204 configured to evaluate the intelligent model according to the execution of online inference.

In an embodiment, the apparatus further includes:
a feedback module 1205 configured to feed back an evaluation report to a provider of the intelligent model.

In an embodiment, the policy generation module 1202 is configured to report the real-time features to an MEC intelligent algorithm APP, and generate a radio optimization assistance policy according to an online inference result indication provided by the MEC intelligent algorithm APP.

In an embodiment, the policy issuing module 1203 is configured to transmit the radio optimization assistance policy to a radio access network element, allowing the radio access network element to perform radio resource optimization.

In an embodiment, the policy issuing module 1203 is configured to transmit the radio optimization assistance policy to an MEC service APP, allowing the MEC APP to perform optimization for an application of a user equipment (UE).

In an embodiment of the present disclosure an RCF is further provided, including: a memory, a processor, and computer programs that are stored in the memory and executable by the processor. The computer programs, when executed by the processor, cause the processor to perform the method for network optimization described above.

In an embodiment of the present disclosure further provided is a computer-readable storage medium, storing computer-executable instructions which, when executed, perform the method for implementing optimization control.

In this embodiment, the storage medium may include, but not limited to, USB flash drives, ROMs (read-only memories), RAMs (random access memories), mobile hard disks, magnetic disks, optical disks, or various mediums that can store program codes.

Those of ordinary skill in the art will appreciate that, all or some of the steps in the method and the functional modules/units in the system and apparatus disclosed above may be implemented as software, firmware, hardware, and appropriate combinations thereof. In hardware implementations, partitioning between functional modules/units mentioned in the above description does not necessarily correspond to partitioning of physical components. For example, a physical component may have multiple functions, or a function or step may be performed by several physical components in cooperation. Some or all components may be implemented as software executed by a processor, such as a digital signal processor or a microprocessor, or as hardware, or as an integrated circuit, such as an application-specific integrated circuit. Such software may be distributed over computer-readable media, which may include computer storage media (or non-transitory media) and communication media (or transitory media). As known to those of ordinary skill in the art, the term computer storage medium includes volatile and non-volatile, removable and non-removable media implemented in any method or technique for storing information, such as computer-readable instructions, data structures, program modules or other data. The computer storage media include, but are not limited to, RAMs, ROMs, EEPROMs, flash memory or other memory technologies, CD-ROM, digital versatile disks (DVDs) or other optical disk storage, magnetic cassettes, magnetic tapes, magnetic disk storage or other magnetic storage devices, or any other media that may be used to store desired information and that may be accessed by a computer. Furthermore, as is well known to those of ordinary skill in the art, a communication medium typically contains computer-readable instructions, data structures, program modules, or other data in a modulated data signal such as a carrier wave or other transmission mechanism, and may include any information delivery medium.

## Claims

1. A method for network optimization, comprising steps of:
determining, by a Radio network optimization Control Functional unit, RCF, in an edge computing system, an intelligent model (100) by at least one of:
a) acquiring the intelligent model from a multi-access edge computing, MEC, management system,
b) acquiring the intelligent model from an MEC intelligent algorithm application, APP; and
c) obtaining the intelligent model by training according to the real-time data acquired by the RCF per se;
determining, by the RCF, real-time features according to real-time data of a radio access network (101);
performing, by the RCF, online inference based on the intelligent model to generate a radio optimization assistance policy according to the real-time features (102); and
transmitting, by the RCF, the radio optimization assistance policy to a radio access network element to allow the radio access network element to realize radio resource optimization (103);
wherein, the RCF is located at a MEC host layer, and connected to an MEC management system, radio access network elements in a 3GPP network, and MEC APPs.

2. The method of claim 1, wherein the real-time data comprises real-time information, and the step of determining, by an RCF, real-time features according to real-time data of a radio access network (101) comprises:
acquiring, by the RCF, real-time information from the radio access network, and extracting real-time features from the real-time information.

3. The method of claim 1, wherein the step of determining, by an RCF, real-time features according to real-time data of a radio access network (101) comprises:
extracting, by the RCF, real-time features from a data stream of a data plane.

4. The method of claim 1, after the step of determining, by the RCF, the real-time features, further comprising a step of:
updating, by the RCF, a local intelligent model according to the real-time features.

5. The method of claim 1, after the step of transmitting, by the RCF, the radio optimization assistance policy to a radio access network element to allow the radio access network element to realize radio resource optimization (103), further comprising a step of:
evaluating, by the RCF, the intelligent model according to the execution of online inference (104).

6. The method of claim 5, after the step of evaluating, by the RCF, the intelligent model according to the execution of online inference (104), further comprising a step of:
feeding back, by the RCF, an evaluation report to a provider of the intelligent model (105).

7. The method of claim 1, wherein the step of generating, by the RCF, a radio optimization assistance policy according to the real-time features (102) comprises:
reporting, by the RCF, the real-time features to the MEC intelligent algorithm APP, and generating the radio optimization assistance policy according to an online inference result indication provided by the MEC intelligent algorithm APP.

8. The method of claim 1, wherein the step of transmitting, by the RCF, the radio optimization assistance policy to a radio access network element to allow the radio access network element to realize radio resource optimization (103) comprises:
transmitting, by the RCF, the radio optimization assistance policy to an MEC service APP, to allow the MEC APP to realize optimization for an application of a user equipment, UE.

9. A Radio network optimization Control Functional unit, RCF, comprising: a memory, a processor and computer programs stored in the memory and executable by the processor, wherein the computer programs, when executed by the processor, cause the processor to perform the method of one of claims 1 to 8.

10. A computer-readable storage medium, storing computer-executable instructions which, when executed by a processor of a Radio network optimization Control Functional unit, RCF, cause the RCF to perform the method of one of claims 1 to 8.

## Patentansprüche

1. Verfahren zur Netzoptimierung, umfassend folgende Schritte:
Bestimmen, durch eine Funknetzoptimierungssteuerungsfunktionseinheit, RCF, in einem Edge-Computing-System, eines intelligenten Modells (100) durch zumindest eines von:
a) Erwerben des intelligenten Modells von einem Multi-Access-Edge-Computing-, MEC-, Managementsystem,
b) Abrufen des intelligenten Modells von einer intelligenten Algorithmusanwendung, APP, des MEC; und
c) Erhalten des intelligenten Modells durch Trainieren gemäß den Echtzeitdaten, die durch die RCF selbst erworben werden;
Bestimmen, durch die RCF, von Echtzeitmerkmalen gemäß Echtzeitdaten eines Funkzugangsnetzes (101);
Durchführen, durch die RCF, von Online-Inferenz basierend auf dem intelligenten Modell, um eine Funkoptimierungsunterstützungsrichtlinie gemäß den Echtzeitmerkmalen (102) zu erzeugen; und
Übertragen, durch die RCF, der Funkoptimierungsunterstützungsrichtlinie an ein Funkzugangsnetzelement, um zu ermöglichen, dass das Funkzugangsnetzelement Funkressourcenoptimierung (103) realisiert;
wobei sich die RCF auf einer MEC-Host-Schicht befindet und mit einem MEC-Managementsystem, Funkzugangsnetzelementen in einem 3GPP-Netz und MEC-APPs verbunden ist.

2. Verfahren nach Anspruch 1, wobei die Echtzeitdaten Echtzeitinformationen umfassen und der Schritt des Bestimmens, durch eine RCF, von Echtzeitmerkmalen gemäß Echtzeitdaten eines Funkzugangsnetzes (101) Folgendes umfasst:
Erwerben, durch die RCF, von Echtzeitinformationen von dem Funkzugangsnetz, und Extrahieren von Echtzeitmerkmalen aus den Echtzeitinformationen.

3. Verfahren nach Anspruch 1, wobei der Schritt des Bestimmens, durch eine RCF, von Echtzeitmerkmalen gemäß Echtzeitdaten eines Funkzugangsnetzes (101) Folgendes umfasst:
Extrahieren, durch die RCF, von Echtzeitmerkmalen aus einem Datenstrom einer Datenebene.

4. Verfahren nach Anspruch 1, nach dem Schritt des Bestimmens, durch die RCF, der Echtzeitmerkmale ferner umfassend einen folgenden Schritt:
Aktualisieren, durch die RCF, eines lokalen intelligenten Modells gemäß den Echtzeitmerkmalen.

5. Verfahren nach Anspruch 1, nach dem Schritt des Übertragens, durch die RCF, der Funkoptimierungsunterstützungsrichtlinie an ein Funkzugangsnetzelement, um zu ermöglichen, dass das Funkzugangsnetzelement Funkressourcenoptimierung (103) realisiert, ferner umfassend einen folgenden Schritt:
Auswerten, durch die RCF, des intelligenten Modells gemäß der Ausführung von Online-Inferenz (104).

6. Verfahren nach Anspruch 5, nach dem Schritt des Auswertens, durch die RCF, des intelligenten Modells gemäß der Ausführung von Online-Inferenz (104) ferner einen folgenden Schritt umfassend:
Rückmelden, durch die RCF, eines Auswertungsberichts an einen Anbieter des intelligenten Modells (105).

7. Verfahren nach Anspruch 1, wobei der Schritt des Erzeugens, durch die RCF, einer Funkoptimierungsunterstützungsrichtlinie gemäß den Echtzeitmerkmalen (102) Folgendes umfasst:
Melden, durch die RCF, der Echtzeitmerkmale an die App für intelligente Algorithmen des MEC, und Erzeugen der Funkoptimierungsunterstützungsrichtlinie gemäß einer Online-Ableitungsergebnisangabe, die durch die App für intelligente Algorithmen des MEC bereitgestellt ist.

8. Verfahren nach Anspruch 1, wobei der Schritt des Übertragens, durch die RCF, der Funkoptimierungsunterstützungsrichtlinie an ein Funkzugangsnetzelement, um zu ermöglichen, dass das Funkzugangsnetzelement Funkressourcenoptimierung (103) realisiert, Folgendes umfasst:
Übertragen, durch die RCF, der Funkoptimierungsunterstützungsrichtlinie an eine MEC-Service-APP, um der MEC-APP zu ermöglichen, Optimierung für eine Anwendung eines Benutzergeräts, UE, zu realisieren.

9. Funknetzoptimierungssteuerungsfunktionseinheit, RCF, umfassend: einen Speicher, einen Prozessor und Computerprogramme, die in dem Speicher gespeichert und durch den Prozessor ausführbar sind, wobei die Computerprogramme, wenn durch den Prozessor ausgeführt, veranlassen, dass der Prozessor das Verfahren nach einem der Ansprüche 1 bis 8 durchführt.

10. Computerlesbares Speichermedium, das computerausführbare Anweisungen speichert, die, wenn durch einen Prozessor einer Funknetzoptimierungssteuerungsfunktionseinheit, RCF, ausgeführt, veranlassen, dass die RCF das Verfahren nach einem der Ansprüche 1 bis 8 durchführt.

## Revendications

1. Procédé permettant l'optimisation de réseau, comprenant les étapes de :
détermination, par une unité à fonction de commande d'optimisation de réseau radio, RCF, dans un système informatique périphérique, d'un modèle intelligent (100) par au moins un parmi :
a) l'acquisition du modèle intelligent à partir d'un système de gestion informatique périphérique multi-accès, MEC,
b) l'acquisition du modèle intelligent à partir d'une application, APP, d'algorithme intelligent MEC ; et
c) l'obtention du modèle intelligent par entraînement selon les données en temps réel acquises par le RCF lui-même ;
la détermination, par le RCF, de caractéristiques en temps réel selon des données en temps réel d'un réseau d'accès radio (101) ;
la réalisation, par le RCF, d'une inférence en ligne sur la base du modèle intelligent pour générer une politique d'assistance à l'optimisation radio selon les caractéristiques en temps réel (102) ; et
la transmission, par le RCF, de la politique d'assistance à l'optimisation radio à un élément de réseau d'accès radio pour permettre à l'élément de réseau d'accès radio de réaliser une optimisation de ressources radio (103) ;
ladite RCF étant située au niveau d'une couche hôte MEC et connectée à un système de gestion MEC, à des éléments de réseau d'accès radio dans un réseau 3GPP et à des APP MEC.

2. Procédé de la revendication 1, lesdites données en temps réel comprenant des informations en temps réel, et ladite étape de détermination, par une RCF, de caractéristiques en temps réel selon des données en temps réel d'un réseau d'accès radio (101) comprenant :
l'acquisition, par le RCF, d'informations en temps réel provenant du réseau d'accès radio, et l'extraction de caractéristiques en temps réel à partir des informations en temps réel.

3. Procédé de la revendication 1, ladite étape de détermination, par une RCF, de caractéristiques en temps réel selon des données en temps réel d'un réseau d'accès radio (101) comprenant :
l'extraction, par la RCF, de caractéristiques en temps réel à partir d'un flux de données d'un plan de données.

4. Procédé de la revendication 1, après l'étape de détermination, par la RCF, des caractéristiques en temps réel, comprenant en outre une étape de :
mise à jour, par la RCF, d'un modèle intelligent local selon des caractéristiques en temps réel.

5. Procédé de la revendication 1, après l'étape de transmission, par la RCF, de la politique d'assistance à l'optimisation radio à un élément de réseau d'accès radio pour permettre à l'élément de réseau d'accès radio de réaliser une optimisation de ressources radio (103), comprenant en outre une étape de :
évaluation, par la RCF, du modèle intelligent selon l'exécution d'une inférence en ligne (104).

6. Procédé de la revendication 5, après l'étape d'évaluation, par la RCF, du modèle intelligent selon l'exécution d'inférence en ligne (104), comprenant en outre une étape de :
renvoi, par le RCF, d'un rapport d'évaluation à un fournisseur du modèle intelligent (105).

7. Procédé de la revendication 1, ladite étape de génération, par la RCF, d'une politique d'assistance à l'optimisation radio selon les caractéristiques en temps réel (102) comprenant :
la déclaration, par le RCF, des caractéristiques en temps réel à l'application d'algorithme intelligent MEC, et la génération de la politique d'assistance à l'optimisation radio selon une indication de résultat d'inférence en ligne fournie par l'APP d'algorithme intelligent MEC.

8. Procédé de la revendication 1, ladite étape de transmission, par la RCF, de la politique d'assistance à l'optimisation radio à un élément de réseau d'accès radio pour permettre à l'élément de réseau d'accès radio de réaliser une optimisation de ressources radio (103) comprenant :
la transmission, par la RCF, de la politique d'assistance à l'optimisation radio à une APP de service MEC, pour permettre à l'APP MEC de réaliser une optimisation pour une application d'un équipement utilisateur, UE.

9. Unité à fonction de commande d'optimisation de réseau radio, RCF, comprenant : une mémoire, un processeur et des programmes informatiques stockés dans la mémoire et exécutables par le processeur, lesdits programmes informatiques, lorsqu'ils sont exécutés par le processeur, amenant le processeur à effectuer le procédé de l'une des revendications 1 à 8.

10. Support de stockage lisible par ordinateur, stockant des instructions exécutables par ordinateur qui, lorsqu'elles sont exécutées par un processeur d'une unité à fonction de commande d'optimisation de réseau radio, RCF, amènent la RCF à effectuer le procédé de l'une des revendications 1 à 8.
